# EUROPEAN PATENT SPECIFICATION

(11) **EP 0 813 548 B1**
(45) Date of publication and mention of the grant of the patent: **05.07.2000**
(21) Application number: 96909747.6
(22) Date of filing: 08.03.1996
(51) Int. Cl.: C08F 2/00, C08F 14/18

(54) **NONAQUEOUS POLYMERIZATION OF FLUOROMONOMERS**
NICHTWÄSSRIGE POLYMERISATION VON FLUORMONOMEREN
POLYMERISATION NON AQUEUSE DE FLUOROMONOMERES

(30) Priority: 10.03.1995 US 402202; 01.06.1995 US 457401; 01.06.1995 US 456789; 21.09.1995 US 531619
(43) Date of publication of application: 29.12.1997
(60) Divisional application: 99114997.2
(73) Proprietor: UNIVERSITY OF NORTH CAROLINA AT CHAPEL HILL ; Office of Research Services, Chapel Hill, NC 27599-4100 (US)
(72) Inventor: DESIMONE, Joseph, M., Chapel Hill, NC 27516-5293 (US); ROMACK, Timothy, Durham, NC 27713 (US)
(74) Representative: Horner, Martin Grenville
(86) International application number: US9603655
(87) International publication number: WO9628477

(56) References cited:
- US-A- 3 522 228
- US-A- 3 642 742
- US-A- 4 861 845
- US-A- 5 021 516
- ROMACK T J ET AL: "SYNTHESIS OF TETRAFLUOROETHYLENE-BASED, NONAQUEOUS FLUOROPOLYMERS IN SUPERCRITICAL CARBON DIOXIDE" MACROMOLECULES., vol. 28, no. 24, 20 November 1995, EASTON US, pages 8429-8431, XP000539444
- DESIMONE ET AL.: "Dispersion Polymerizations in Supercritical Carbon Dioxide" SCIENCE., vol. 265, 15 July 1994, WASHINGTON US, pages 356-359, XP002061558
- DESIMONE J M ET AL: "SYNTHESIS OF FLUOROPOLYMERS IN SUPERCRITICAL CARBON DIOXIDE" SCIENCE, vol. 257, 14 August 1992, WASHINGTON, DC, pages 945-947, XP000647726

## Description

### Field of the Invention

The present invention relates to a nonaqueous polymerization process for making fluorinated polymers, including copolymers thereof, in a medium comprising carbon dioxide.

### Background of the Invention

Two essential techniques have been employed for the polymerization of fluoromonomers. The most inexpensive and commercially employed technique involves the use of a water-soluble polymerization initiator, and is known as an "aqueous polymerization system." The disadvantage of aqueous polymerization systems is that the resulting fluoropolymers have unstable end groups which are undesirable for many applications. Some of these end groups, such as ionic end groups, carboxylic acid end groups and acid fluoride end groups are hydrolytically unstable or decompose under specific processing techniques, resulting in bubbles or discolorations. These undesirable end groups can be avoided through the use of nonaqueous polymerization systems.

One needs to be careful when choosing a non aqueous medium for fluoromonomer polymerization systems so that the medium does not lead to excessive chain transfer reactions. This is because upon treatment of a fluoromonomer, such as tetrafluoroethylene, with a free radical initiator, the result is a propagating radical chain end that is highly electrophilic. Such highly electrophilic fluorinated radicals are prone to extensive chain transfer to conventional solvents. In addition, in nonaqueous polymerization systems, the initiator must be relatively soluble in the nonaqueous medium employed and the initiator must be chosen to give polymers that have stable end groups which do not decompose during processing. One nonaqueous polymerization system involves the use of fluorinated initiators and chlorofluorocarbon polymerization media, such as that described in U.S. Patent No. 3,642,742 to Carlson. However, in light of the identification of chlorofluorocarbons as one of the primary factors in atmospheric ozone depletion, extensive effort has been directed toward discovering alternative polymerization media systems for fluoropolymerizations.

U.S. Patent No. 3,642,742 to Carlson discloses one alternative polymerization system involving the use of a fluorinated initiator, a hydrogen containing chain transfer agent, and a fluorocarbon medium. U.S. Patent No. 5,182,342 to Feiring et al. discloses the use of hydrofluorocarbons as yet another alternative to chlorofluorocarbon systems. Perfluorocarbon and hydrofluorocarbon media are disadvantageous in that they are expensive. Other fluoropolymerization media which have been explored include perfluoroalkyl sulfide fluids, as described in U.S Patent No. 5,286,822 to Krespam et al., and perfluorinated cyclic amines, as described in U.S. Patent No. 5,310,836 to Treat. However, these media are also expensive.

As an alternative polymerization media, researchers have recently begun exploring the use of carbon dioxide as a polymerization medium. For example, U.S. Patent No. 3,522,228 to Fukui et al. discloses the polymerization of vinyl monomers using peroxide polymerization initiators in liquid carbon dioxide at temperatures from -78°C to 100°C. Fukui provides no example of a fluoromonomer polymerization in a carbon dioxide solvent, and indeed the methods disclosed therein have failed to achieve commercial utility for the preparation of fluoropolymers. In addition, Fukui fails to recognize the important role of stable end groups in fluoropolymers. U.S. Patent No. 5,328,972 to Dada et al. discloses a process for the production of low molecular weight polymers of C₃-C₄ monoethylenically unsaturated monocarboxylic acids in supercritical carbon dioxide at temperatures of at least 200°C and pressures above 3,500 psi. U.S. Patent No. 5,345,013 to Van Bramer et al. proposes mixtures of tetrafluoroethylene monomer and carbon dioxide for safe handling, but does not discuss fluoropolymerization methods.

PCT Publication No. WO 93/20116 to University of North Carolina at Chapel Hill discloses processes for making fluoropolymers comprising solubilizing a fluoromonomer in a solvent comprising carbon dioxide. PCT Publication No. 93 WO/20116 is not concerned with the problem of polymerizing fluoromonomers to provide polymers having stable end groups.

Accordingly, there remains a need in the art for a method of making fluoropolymers having stable end groups which avoids the use of polymerization media which are detrimental to the environment, such as chlorofluorocarbons. There is also a need in the art for fluoropolymerization processes capable of commercialization, which produce fluoropolymers having stable end groups, and which utilize nonhazardous, relatively inexpensive polymerization media which are relatively easily separable from the fluoropolymer produced.

### Summary of the Invention

As a first aspect, the present invention provides
a process for making fluorinated polymers having stable end groups comprising:
contacting at least one monomer, an initiator capable of producing said stable end groups on said fluorinated polymer, and a polymerization medium comprising liquid or supercritical carbon dioxide; and
polymerizing said monomer to produce a fluorinated homopolymer or a fluorinated copolymer;
with the proviso that when said polymerizing step produces a fluorinated copolymer, said at least one monomer is selected from the groups a) through e) consisting of:
a) tetrafluoroethylene and at least one additional monomer described by a formula selected from the group consisting of CF₂=CFOCF₂CF₂SO₂F; CF₂=CFOCF₂CF(CF₃)OCF₂CF₂SO₂F; and CF₂=CFOCF₂CF(CF₃)OCF₂CF₂CO₂CH₃;
b) tetrafluoroethylene and at least one additional monomer selected from the group consisting of a partially fluorinated monomer, a monomer having a functional group suitable for crosslinking, hexafluoropropylene, perfluoro(2,2-dimethyldioxole), perfluoro(2,2-dimethyl-1,3-dioxole), a fluorodiene monomer, a perfluoroalkyl ethylene monomer with perfluoroalkyl groups containing 1 to 6 carbon atoms and a non-fluorinated monomer;
c) at least two monomers selected from the group consisting of a partially fluorinated monomer, a monomer having a functional group suitable for crosslinking, hexafluoropropylene, perfluoro(2,2-dimethyldioxole), perfluoro(2,2-dimethyl-1,3-dioxole), a perfluoroalkyl ethylene monomer with perfluoroalkyl groups containing 1 to 6 carbon atoms, a fluorodiene monomer, and a non-fluorinated monomer;
d) a perfluoro(alkyl vinyl ether) monomer with perfluoroalkyl groups containing 1 to 6 carbon atoms and at least one additional monomer selected from the group consisting of a partially fluorinated monomer, a monomer having a functional group suitable for crosslinking, hexafluoropropylene, a perfluoroalkyl ethylene monomer with perfluoroalkyl groups containing 1 to 6 carbon atoms, perfluoro(2,2-dimethyldioxole), perfluoro(2,2-dimethyl-1,3-dioxole), a fluorodiene monomer, and a non-fluorinated monomer; and
e) tetrafluoroethylene, a perfluoro(alkyl vinyl ether) monomer with perfluoroalkyl groups containing 1 to 6 carbon atoms, and at least one additional monomer selected from the group consisting of a partially fluorinated monomer, a monomer having a functional group suitable for crosslinking, hexafluoropropylene, a perfluoroalkyl ethylene monomer with perfluoroalkyl groups containing 1 to 6 carbon atoms, perfluoro(2,2-dimethyldioxole), perfluoro(2,2-dimethyl-1,3-dioxole), a fluorodiene monomer, and a non-fluorinated monomer.

As a third aspect, the present invention provides
a polymerization reaction mixture useful for carrying out the polymerization of at least one monomer to produce a fluorinated polymer having stable end groups, said reaction mixture comprising:
at least one monomer;
an initiator capable of producing stable end groups on said fluoropolymer, wherein said fluoropolymer is a homopolymer or a copolymer; and
a polymerization medium comprising liquid or supercritical carbon dioxide; with the proviso that when said fluoropolymer is a copolymer, said at least one monomer is selected from the groups a) through e) consisting of:
a) tetrafluoroethylene and at least one additional monomer described by a formula selected from the group consisting of CF₂=CFOCF₂CF₂SO₂F; CF₂=CFOCF₂CF(CF₃)OCF₂CF₂SO₂F; and CF₂=CFOCF₂CF(CF₃)OCF₂CF₂CO₂CH₃;
b) tetrafluoroethylene and at least one additional monomer selected from the group consisting of a partially fluorinated monomer, a monomer having a functional group suitable for crosslinking, hexafluoropropylene, perfluoro(2,2,-dimethyldioxole); perfluoro(2,2-dimethyl-1,3-dioxole), a fluorodiene monomer, a perfluoroalkyl ethylene monomer with perfluoroalkyl groups containing 1 to 6 carbon atoms and a non-fluorinated monomer;
c) at least two monomers selected from the group consisting of a partially fluorinated monomer, a monomer having a functional group suitable for crosslinking, hexafluoropropylene, perfluoro(2,2-dimethyldioxole), perfluoro(2,2-dimethyl-1,3-dioxole), a perfluoroalkyl ethylene monomer with perfluoroalkyl groups containing 1 to 6 carbon atoms, a fluorodiene monomer, and a non-fluorinated monomer;
d) a perfluoro(alkyl vinyl ether) monomer with perfluoroalkyl groups containing 1 to 6 carbon atoms and at least one additional monomer selected from the group consisting of a partially fluorinated monomer, a monomer having a functional group suitable for crosslinking, hexafluoropropylene, a perfluoroalkyl ethylene monomer, perfluoro(2,2-dimethyldioxole), perfluoro(2,2-dimethyl-1,3-dioxole), a fluorodiene monomer, and a non-fluorinated monomer; and
e) tetrafluoroethylene, a perfluoro(alkyl vinyl ether) monomer with perfluoroalkyl groups containing 1 to 6 carbon atoms, and at least one additional monomer selected from the group consisting of a partially fluorinated monomer, a monomer having a functional group suitable for crosslinking, hexafluoropropylene, a perfluoroalkyl ethylene monomer with perfluoroalkyl groups containing 1 to 6 carbon atoms, perfluoro(2,2-dimethyldioxole), perfluoro(2,2-dimethyl-1,3-dioxole), a fluorodiene monomer, and a non-fluorinated monomer.

### Detailed Description of the Invention

As used herein, the term "supercritical" has its conventional meaning in the art. A supercritical fluid (SCF) is a substance above its critical temperature and critical pressure (or "critical point"). Compressing a gas normally causes a phase separation and the appearance of a separate liquid phase. However, if the fluid is in a supercritical state, compression will only result in density increases; no liquid phase will be formed. The use of supercritical fluids for carrying out polymerization processes has received relatively little attention. The term "fluoropolymer, as used herein, has its conventional meaning in the art. *See generally Fluoropolymers* (L. Wall, Ed. 1972) (Wiley-Interscience Division of John Wiley & Sons); *See also Fluorine-Containing Polymers,* 7 Encyclopedia of Polymer Science and Engineering 256 (H. Mark et al. Eds., 2d Ed. 1985). Likewise, the term "fluoromonomer" refers to fluorinated precursor monomers employed in the synthesis of fluoropolymers. The phrase "stable end group(s)" as used herein refers to polymer chain end groups which essentially do not decompose when the polymer is heated to its melt processing temperature. Such processing temperatures are generally known in the art, such as those described in Banks et al. Organofluorine Chemistry: Principles and Commercial Applications (1994). Specific examples of stable end groups include perfluoroalkyl end groups, perfluoroalkoxy end groups, perchloroalkyl end groups, and the like. Typically, a polymer having stable end groups is a polymer which has fewer unstable end groups than would be observed in the same polymer, having substantially the same molecular weight, prepared according to aqueous polymerization techniques. More specifically, a polymer having stable end groups is typically a polymer which has less than 400 unstable end groups which can be acid fluoride or carboxylic acid end groups, per million carbon atoms. In particular embodiments, a polymer having stable end groups is a polymer which has 300 or less, 200 or less, or 100 or less, unstable end groups as defined above per million carbon atoms.

The fluoromonomers useful in the processes of the present invention include any suitable fluoromonomers known to those skilled in the art. The fluoromonomers may be in a gaseous or liquid state. Generally, the fluoromonomers useful in the processes of the present invention are homopolymerizable or copolymerizable by a free radical mechanism. Preferred fluoromonomers will contain at least one fluorine atom, perfluoroalkyl group, or perfluoroalkoxy group directly attached to the vinyl group that undergoes polymerization. Examples of suitable fluoromonomers include, but are not limited to. perfluoroolefins, particularly tetrafluoroethylene; perfluoro(alkyl vinyl ethers) with perfluoroalkyl groups containing 1 to 6 carbon atoms and those containing functional groups such as CF₂=CFOCF₂CF(CF₃)OCF₂CF₂SO₂F and CF₂=CFOCF₂CF(CF₃)OCF₂CF₂CO₂CH₃; hexafluoropropylene; perfluoro(2,2-dimethyldioxole); fluorodienes, such as CF₂=CFO(CF₂)ₙCF=CF₂ and CF₂=CFOCH₂(CF₂)ₙCF=CF₂; and partially fluorinated monomers, particularly vinyl fluoride, vinylidene fluoride, chlorotrifluoroethylene, hexafluoroisobutylene, and perfluoroalkyl ethylenes with perfluoroalkyl groups containing 1 to 6 carbon atoms. Copolymers of fluorinated monomers with nonfluorinated monomers, particularly ethylene, propylene, vinylacetate, alkylvinyl ethers, acrylates, methacrylates, and styrenics may also be included. Copolymers of fluorinated monomers with monomers having a functional group suitable for crosslinking, such as bromotrifluoroethylene and bromodifluoroethylene may also be included. Preferred fluoromonomers include tetrafluoroethylene, hexafluoropropylene, perfluoromethylvinyl ether, perfluoroethylvinyl ether, perfluoropropylvinyl ether, vinyl fluoride, vinylidene fluoride, chlorotrifluoroethylene, and perfluoro(2,2-dimethyl dioxole).

The fluoropolymers produced according to the processes of the present invention include homopolymers of any of the foregoing fluoromonomers, or in the embodiment wherein one or more comonomers are employed in combination with the fluoromonomer, the resulting fluoropolymers may be copolymers. Examples of homopolymers which may be produced according to the methods of the present invention include polytetrafluoroethylene, polyvinylfluoride, polyvinylidine fluoride, polychlorotrifluoroethylene, polyhexafluoroisobutylene, and the like.

The comonomers useful in the methods of the present invention may be fluoromonomers (as indicated above), or they may be non-fluorinated monomers which are capable of copolymerizing with the fluoromonomers of the present invention. Suitable non-fluorinated comonomers include those described above.

Copolymers which may be produced according to the processes of the present invention include tetrafluoroethylene/hexafluoropropylene,
tetrafluoroethylene/hexafluoropropylene/vinylidine fluoride,
hexafluoropropylene/vinylidine fluoride,
perfluoro(methyl vinyl ether)/vinylidine fluoride,
perfluoro(methyl vinyl ether)/vinylidinefluoride/tetrafluoroethylene,
chlorotrifluoroethylene/vinylidine fluoride,
chlorotrifluoroethylene/ethylene,
chlorotrifluoroethylene/tetrafluoroethylene/ethylene,
tetrafluoroethylene/perfluoro(propyl vinyl ether),
tetrafluoroethylene/perfluoro(methyl vinyl ether),
tetrafluoroethylene/perfluoro(2,2-dimethyl-1,3-dioxole),
tetrafluoroethylene/ethylene,
tetrafluoroethylene/propylene,
tetrafluoroethylene/CF₂=CFOCF₂CF(CF₃)OCF₂CF₂SO₂F,
tetrafluoroethylene/CF₂=CFOCF₂CF₂SO₂F, tetrafluoroethylene/hexafluoropropylene/perfluoro(propyl vinyl ether), and tetrafluoroethylene/CF₂ = CFO(CF₂)ₙCF = CF₂.

Preferred copolymers which may be produced according to processes of the present invention include perfluorinated copolymers such as tetrafluoroethylene/perfluoro(propyl vinyl ether),
tetrafluoroethylene/hexafluoropropylene,
tetrafluoroethylene/perfluoro(2,2-dimethyl-1,3-dioxide),
tetrafluoroethylene/perfluoro(methyl vinyl ether),
tetrafluoroethylene/CF₂ = CFOCF₂CF₂SO₂F, and
tetrafluoroethylene/CF₂ = CFOCF₂(CF₃)OCF₂CF₂SO₂F.

In the processes of the present invention, the fluoromonomers are polymerized in the presence of a polymerization initiator. The initiator is capable of providing a stable end group on the polymer chain. Generally, the initiator becomes part of the polymer chain. Consequently, upon the termination of polymerization, the initiator provides the end group for the polymer chain. Examples of suitable initiators which are capable of providing a stable end group include halogenated initiators. Suitable halogenated initiators include, for example, chlorinated and fluorinated initiators, which are capable of decomposing into free radical species. Initiators which are soluble in the polymerization medium are preferred. For example, suitable polymerization initiators include chlorocarbon based and fluorocarbon based acyl peroxides such as trichloroacetyl peroxide, bis(perfluoro-2-propoxy propionyl) peroxide, [CF₃CF₂CF₂OCF(CF₃)COO]₂, perfluoropropionyl peroxides, (CF₃CF₂CF₂COO)₂, (CF₃CF₂COO)₂, {(CF₃CF₂CF₂)[CF(CF₃)CF₂O]CF(CF₃)COO}₂, [ClCF₂(CF₂)ₙCOO]₂ and [HCF₂(CF₂)ₙCOO]₂ where n= 0-8; perfluoroalkyl azo compounds such as perfluoroazoisopropane, [(CF₃)₂CFN=]₂; R₄N=NR₄, where R₄ is a linear or branched perfluorocarbon group having 1-8 carbons; stable or hindered perfluoroalkane radicals such as hexafluoropropylene trimer radical, [(CF₃)₂CF]₂(CF₂CF₂)C• radical and perfluoroalkanes. Preferably, the initiator is a fluorinated initiator, and more preferably the initiator is selected from the group consisting of bis(perfluoro-2-propoxy propionyl) peroxide, perfluoropropionyl peroxide, perfluoroazoisopropane, and hexafluoropropylene trimer radical.

The stable end group which is provided by the polymerization initiator is a function of the particular initiator employed. Typically, the stable end group is a perfluoroalkyl, perfluoroalkoxy, or perchloroalkyl end group inasmuch as the initiators typically contain such groups. These end groups are thermally and hydrolytically stable during conventional fluoropolymer processing conditions, and do not decompose to other species.

The processes of the invention are carried out in a polymerization medium comprising carbon dioxide. The carbon dioxide is in a liquid or supercritical state. Preferably the polymerization medium is supercritical carbon dioxide. In a supercritical polymerization medium, only a single fluid phase is present; as a result, the effective concentration of a gaseous monomer, such as tetrafluoroethylene, is directly a function of the amount charged and is not dependent upon the solubility of the gaseous monomer in a liquid polymerization medium. This presents an advantage in terms of copolymer composition control. In addition, supercritical carbon dioxide is a highly tunable polymerization medium and allows the manipulation of solvent strength and density through simple changes in temperature and pressure, which in turn allows an additional measure of control over reaction parameters. Supercritical carbon dioxide also offers high mass transport rates and low fluid viscosity.

The polymerization medium may also include one or more cosolvents. Illustrative cosolvents include perfluorocarbons, hydrofluorocarbons, perfluoroalkyl sulfides, and like. It may be desirable for the cosolvent to be capable of solubilizing the initiator such that the initiator may be provided to the reaction in the solubilized form.

The initiator may be added in neat form, as a solution in carbon dioxide, or it may conveniently be added as a solution in a cosolvent. Typically, the initiator is used in an amount conventionally employed for polymerization. The amount of initiator employed depends on several factors, including the specific monomers and comonomers to be polymerized, the reactivity of the monomers or comonomers, the reaction conditions, and the particular initiator chosen. For example, the initiator may be used in an amount of about 10⁻⁶ to 10, preferably about 10⁻⁵ to 2, parts by weight per 100 parts by weight monomer.

The polymerization reaction mixture may include other additives and reactants known to those skilled in the art for controlling the physical or chemical properties of the resulting polymer. For example, in one preferred embodiment, the polymerization reaction mixture includes a chain transfer agent for regulating the molecular weight of the resulting polymer. Suitable chain transfer agents will be readily known to those skilled in the art and include, for example, hydrocarbons such as ethane and methyl cyclohexane; alcohols, such as methanol; mercaptans, such as ethyl and butyl mercaptan; sulfides, such as butyl sulfide; and halogenated hydrocarbons such as alkyl iodides, perfluoroalkyl iodides, alkyl bromides, perfluoroalkyl bromides, carbon tetrachloride, and chloroform. As will be appreciated by those skilled in the art, when chain transfer agents are employed a significant number of end groups are derived from the chain transfer agent. As a result chain transfer agents should be selected so as to avoid the formation of unstable end groups. Preferred chain transfer agents include ethane and chloroform.

It may be desirable to also include compounds which accelerate the decomposition of the initiator. Such compounds typically permit the polymerization reaction to take place a lower pressures than would otherwise be required, thus permitting the methods of the present invention to be practiced in conventional fluoropolymerization reactors. Suitable compounds which accelerate decomposition are known to those skilled in the art and include but are not limited to, redox systems, sulfur dioxide, ultraviolet light, and others.

The polymerization reaction may be carried out at a temperature of about -50°C up to about 200°C, and is typically carried out at a temperature of between about -20°C and about 150°C. The reaction may be carried out at a pressure ranging from about 1.034 x 10⁵ Pa to 3.103 x 10⁸ Pa (15 psi to about 45,000 psi,) and is typically carried out at a pressure of between about 3.448 x 10⁵ Pa to 6.895 x 10⁷ Pa (500 psi and about 10,000 psi).

The polymerization can be carried out batchwise or continuously with thorough mixing of the reactants in any appropriately designed high pressure reaction vessel. To remove the heat evolved during the polymerization, advantageously the pressure apparatus includes a cooling system. Additional features of the pressure apparatus used in accordance with the invention include heating means such as an electric heating furnace to heat the reaction mixture to the desired temperature and mixing means, i.e., stirrers such as paddle stirrers, impeller stirrers, or multistage impulse countercurrent agitators, blades, and the like.

The polymerization can be carried out, for example, by feeding a mixture of monomer and carbon dioxide into a pressure apparatus containing the initiator. The reaction vessel is closed and the reaction mixture brought to the polymerization temperature and pressure. Alternatively, only a part of the reaction mixture may be introduced into an autoclave and heated to the polymerization temperature and pressure, with additional reaction mixture being pumped in at a rate corresponding to the rate of polymerization. In another possible procedure, some of the monomers are initially taken into the autoclave in the total amount of carbon dioxide and the monomers or comonomers are pumped into the autoclave together with the initiator at the rate at which the polymerization proceeds. Continuous or semibatch modes of addition may be useful to control polymer composition and composition distribution. These modes are particularly useful in copolymerization of two monomers with dramatically different reactivities such as tetrafluoroethylene and hexafluoropropylene.

When the polymerization is complete the polymer may be separated from the reaction mixture. Any suitable means of separating the polymer from the reaction mixture may be employed. Typically, according to the process of the present invention, the polymer is separated from the reaction mixture by venting the polymerization medium to the atmosphere. Thereafter the polymer may be collected by physical isolation.

It may be desirable, for some applications to wash the resulting polymer prior to further processing. The polymer is preferably washed in a wash fluid comprising carbon dioxide prior to or after venting the polymerization medium to the atmosphere and collecting the polymer. Typically, the wash fluid comprises carbon dioxide, or a mixture of carbon dioxide with methanol, amines such as ammonia, or fluorine gas. The methanol, amines, or fluorine gas may be introduced into the reactor containing the polymerization medium by suitable means known to those skilled in the art.

The fluoropolymers produced according to the processes of the present invention contain stable end groups. Preferably, the fluoropolymers contain perfluoroalkyl, perfluoroalkoxy, or perchloroalkyl end groups. These fluoropolymers are useful in areas where conventional fluoropolymers are employed, and particularly as wire coatings, gaskets, seals, hoses, vessel linings, elastomers, molded resins, protective coatings, and the like.

The following examples are provided to illustrate the present invention, and should not be construed as limiting thereof. In these examples, "psi" means pounds per square inch; "g" means grams; "mg" means milligrams; "mL" means milliliters; "min." means minutes; "FTIR" means fourier transform infrared; "IR" means infrared; and " °C" means degrees celsius. Molecular weight is estimated using the method described in T. Suwa, et al., *J. Applied Polymer Sci.* **17**:3253 (1973).

### EXAMPLE 1

### Tetrafluoroethylene homopolymer

A 25 ml high pressure reactor is cooled to well below 0°C in a dry ice/acetone bath under argon. A 0.018 M solution of HFPO dimer peroxide initiation of 1,1,2-trichlorotrifluoroethane (0.050 ml) is added while maintaining a positive argon purge, and the reactor is sealed. A 50/50 wt./wt. % mixture (9.7 g) of tetrafluoroethylene (4.8 g) and carbon dioxide (4.8 g) is condensed into the reactor at a temperature of below -20°C, and CO₂ (10 g) is added via high pressure syringe pump. The reactor is slowly heated to 35°C and held for 3 hours. After the reaction is complete the carbon dioxide and excess monomer are vented slowly to the atmosphere, the reactor is opened, and the product collected. The product is washed twice with 1,1,2-trichlorotrifluoroethane/methanol (1:1) and dried under vacuum at elevated temperature. The reaction yields 1.57 g of a white polymer (32% yield). Thermogravimetric shows a 5% weight loss at 533.2°C. Differential scanning calorimetry shows a virgin melting point of 328.5°C, a second melt of 328.5°C, and a crystallization exotherm at 308.7°C (second cooling) yielding a heat of crystallization of 50.6 J/g corresponding to an estimated molecular weight of 55,000 g/mol.

### EXAMPLE 2

### Tetrafluoroethylene homopolymer

A 25 ml high pressure reactor is cooled to well below 0°C in a dry ice/acetone bath under argon. A 0.24 M solution of HFPO dimer peroxide initiator in 1,1,2-trichlorotrifluoroethane (0.010 ml) is added while maintaining a positive argon purge, and the reactor is sealed. A 50/50 wt./wt.% mixture (12.9 g) of tetrafluoroethylene (6.4 g) and carbon dioxide (6.4 g) is condensed into the reactor at a temperature of below -20°C, and 10 g CO₂ (10 g) is added via high pressure syringe pump. The reactor is slowly heated to 35°C and held for 4 hours. After the reaction is complete the carbon dioxide and excess monomer are vented slowly to the atmosphere, the reactor is opened, and the product is collected. The product is washed twice. After washing twice with a 50/50 mixture of 1,1,2-trichlorotrifluoroethane/methanol, the product is dried under vacuum at elevated temperature. The reaction yields 6.47 grams of white polymer (100% yield). Thermogravimetric analysis shows a 5% weight loss at 537.2°C. Differential scanning calorimetry shows a virgin melting point of 334.9°C, a second melt of 328.5°C, a crystallization exotherm at 309.2°C (second cooling), yielding a heat of crystallization of 41.2 J/g corresponding to an estimated molecular weight of 160,000 g/mol.

### EXAMPLE 3

### PPVE/TFE Copolymer

A 25 ml high pressure reactor is cooled to well below 0°C in a dry ice/acetone bath under argon. A 0.018 M solution of HFPO dimer peroxide initiator in 1,1,2-trichlorotrifluoroethane (0.10 ml) perfluoro(propyl vinyl ether) (0.80 ml, 1.2 g), which has been sparged with argon are added while maintaining a positive argon purge, and the reactor is sealed. A 50/50 wt./wt. % mixture (10.5 g) of tetrafluoroethylene (5.2 g) and carbon dioxide (5.2 g) is condensed into the reactor at a temperature of below -20°C, and CO₂ (10 g) were added via high pressure syringe pump. The reactor is slowly heated to 35.0°C, and held for 4 hours. The reactor window gradually becomes cloudy over the first thirty minutes after which time the window appears white and no further change can be observed. After the reaction is complete the carbon dioxide and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 5.32 g of white polymer (100% yield based on TFE). Thermogravimetric analysis shows a 5% weight loss at 535.0°C. Differential scanning calorimetry shows a virgin melting point of 330.5°C, a second melt of 328.5°C, and a crystallization exotherm at 303.3°C (second cooling). End group analysis by FTIR found no detectable acid fluoride or carboxylic acid end groups.

For copolymers incorporating fluorinated vinyl ether monomers, such as perfluoro(propyl vinyl ether), unstable acid fluoride end groups may be observed when polymerization is carried out in conventional polymerization media such as 1,1,2-trichlorotrifluoroethane, even though the initiators employed are capable of providing stable end groups. The unstable acid fluoride end groups are believed to result from chain transfer/rearrangement side reactions involving the fluorinated alkyl vinyl ether. U.S. Patent No. 4,743,658 to Imbalzano et al., discusses copolymers of perfluoro(propyl vinyl ether) and tetrafluoroethylene prepared using a perfluorinated acid peroxide in a 1,1,2-trichlorotrifluoroethane polymerization medium. The resulting Imbalzano et al. copolymer exhibits 138 acid fluoride end groups per million carbon atoms. In contrast, the combined acid fluoride and carboxylic acid end groups for copolymerizations conducted in accordance with the present invention in carbon dioxide were not greater than 11 unstable groups per million carbon atoms. This result indicates that the initiators employed in the present invention in combination with the carbon dioxide polymerization medium advantageously reduce the number of unstable end groups to a significant degree. It is believed that the carbon dioxide polymerization medium of the present invention limits the fluoroalkyl vinyl ether rearrangement, thus producing fewer unstable end groups. For the reaction run in carbon dioxide and methanol, as a chain transfer agent, 80 methyl ester end groups were observed per million carbon atoms.

### EXAMPLE 4

### PPVE/TFE Copolymer

A 25 ml high pressure reactor is cooled to well below 0°C in a dry ice/acetone bath under argon. A 0.018 M solution of HFPO dimer peroxide initiator in 1,1,2-trichlorotrifluoroethane (0.10 m) and perfluoro(propyl vinyl ether) (0.80 ml, 1.2 g) which has been sparged with argon are added while maintaining a positive argon purge, and the reactor is sealed. A 50/50 wt./wt. % mixture (9.4 g) of tetrafluoroethylene (4.7 g) and carbon dioxide (4.7 g) is condensed into the reactor at a temperature of below -20°C, and CO₂ (10 g) is added via high pressure syringe pump. The reactor is slowly heated to 35.0°C and held for 3 hours at which time heating is discontinued. After the reaction is complete the carbon dioxide and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 4.67 g of white polymer (99% yield based on TFE). Thermogravimetric analysis shows a 5% weight loss at 524.2°C. Differential scanning calorimetry shows a virgin melting point of 321.5°C, and a crystallization exotherm at 291.3 °C (first cooling). End group analysis by FTIR found no detectable acid fluoride or carboxylic acid end groups.

### EXAMPLE 5

### TFE/PPVE Copolymer

A 25 ml high pressure reactor is chilled to well below 0°C in a dry ice/acetone bath under argon. A 0.24 M solution of HFPO dimer peroxide initiator in 1,1,2-trichlorotrifluoroethane (0.10 ml) and 2.4 ml (3.7) perfluoro(propyl vinyl ether) (2.4 ml, 3.7 g) which has been sparged with argon, are added while maintaining a positive argon purge, and the reactor is sealed. A 50/50 wt./wt. % mixture (11.0 g) of tetrafluoroethylene (5.5 g) and carbon dioxide (5.5 g) is condensed into the reactor at a temperature of below -20°C, and CO₂ (10 g) is added via high pressure syringe pump. The reactor is slowly heated to 35°C and held for 4 hours at which time heating is discontinued. After the reaction is complete the carbon dioxide and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 5.58 g of white polymer (100% yield based on TFE). Thermogravimetric analysis shows a 5% weight loss at 494.0°C. Differential scanning calorimetry shows a virgin melting point of 318.6°C and a crystallization exotherm at 300.9°C (first cooling). End group analysis by FTIR found a combined total of three acid fluoride and carboxylic acid end groups per 10⁶ carbon atoms.

### EXAMPLE 6

### TFE/PPVE Copolymer

A 25 ml high pressure reactor is chilled to well below 0°C in a dry ice/acetone bath under argon. A 0.24 M solution of HFPO dimer peroxide initiator in 1,1,2-trichlorotrifluoroethane (0.080 ml) and perfluoro(propyl vinyl ether) (2.4 ml, 3.7 g) which has been sparged with argon, is added while maintaining a positive argon purge, and the reactor is sealed. A 50/50 wt./wt. % mixture (10.1 g) of tetrafluoroethylene (5.0 g) and carbon dioxide (5.0 g) is condensed into the reactor at a temperature of below -20°C and CO₂ (10 g) is added via high pressure syringe pump. The reactor is then slowly heated and at ca. 22°C an exothermic reaction brings the temperature to 50.9°C. After several minutes the temperature decreases to 35 and is maintained for 4 hours at which time heating is discontinued. The cell window gradually becomes cloudy over the first few minutes after which time the window appears white and no further change can be observed. After the reaction is complete the carbon dioxide and excess monomer are vented slowly to the atmosphere, the reactor is opened, and the product collected. The product is washed twice with a 50/50 mixture of 1,1,2-trichlorotrifluoroethane/methanol and dried under vacuum at elevated temperature. The reaction yields 5.03 g of white polymer (100% yield based on TFE).

Thermogravimetric analysis shows a 5% weight loss at 511.1°C. Differential scanning calorimetry shows a virgin melting point of 312.7°C, and a crystallization exotherm at 294.0°C (first cooling). Analysis by FTIR observed 5.20 wt. % perfluoro(propylvinyl ether) incorporation and only 1.7 carboxylic acid and 2.5 carboxylic acid fluoride end groups per 10⁶ carbon atoms.

### EXAMPLE 7

### TFE/PPVE Copolymer

A 25 ml high pressure reactor is chilled to well below 0°C in a dry ice/acetone bath under argon. A 0.24 M solution of HFPO dimer peroxide initiator in 1,1,2-trichlorotrifluoroethane (0.08 ml) and perfluoro(propyl vinyl ether) (4.0 ml, 6.1 g) which has been sparged with argon, are added while maintaining a positive argon purge, and the reactor is sealed. A 50/50 wt./wt. % mixture (11.2 g) of tetrafluoroethylene (5.6 g) and carbon dioxide (5.6 g) is condensed into the reactor at a temperature of below -20°C and CO₂ (10 g) is added via high pressure syringe pump. The reactor is slowly heated and at ca. 25.0°C an exothermic reaction brings the temperature to 52.0°C. After several minutes, the temperature decreases to 35°C where it is maintained for 4 hours, at which time heating is discontinued. After the reaction is complete the carbon dioxide and excess monomer are vented slowly to the atmosphere, the reactor is opened, and the product collected. The product is washed twice with a 50/50 mixture of 1,1,2-trichlorotrifluoroethane/methanol and dried under vacuum at elevated temperature. The reaction yields 5.67 g of white polymer (100% yield based on TFE). Thermogravimetric analysis shows a 5% weight loss at 511.4°C. Differential scanning calorimetry shows a virgin melting point of 313.7°C, and a crystallization exotherm at 295.0°C (first cooling). Analysis by FTIR observed 5.77 wt. % perfluoro(propylvinyl ether) incorporation and only 2.7 carboxylic acid and less than 3 carboxylic acid fluoride end groups per 10⁶ carbon atoms.

### EXAMPLE 8

### TFE/PPVE Copolymer

A 25 ml high pressure reactor is chilled to well below 0°C in a dry ice bath under argon. A 0.24 M solution of bis(perfluoro-2-propoxypropionyl)peroxide in F-113 (0.05 ml) and perfluoro(propyl vinyl ether) (5.0 ml, 7.6 g) which had previously been sparged with argon, are added while maintaining a positive argon purge and the reactor is sealed. A 50 wt./wt. % mixture (9.8 g) of tetrafluoroethylene (4.9 g) and carbon dioxide (4.9 g) is condensed into the reactor at a temperature of below -20°C, and CO₂ (10 g) is added via high pressure syringe pump. The reactor is slowly heated to 35°C and held for 3.5 hours at which time heating is discontinued. After the reaction is complete the carbon dioxide and excess monomer are vented slowly to the atmosphere, the reactor is opened, and the product collected. The product is washed twice with a 50/50 mixture of 1,1,2-trichlorotrifluoroethane and dried under vacuum at elevated temperature. The reaction yields 5.05 g of product (100% yield based on TFE). Thermogravimetric shows a 5% weight loss at 512.1°C. Differential scanning calorimetry shows a virgin melting point of 317.6°C, and a crystallization exotherm at 298.9°C (first cooling).

### EXAMPLE 9

### TFE/HFP Copolymer

A 25 ml high pressure reactor is chilled to well below 0°C in a dry ice/acetone bath under argon. A 0.024 M solution of HFPO dimer peroxide initiator in 1,1,2-trichlorotrifluoroethane (0.050 ml) is added while maintaining a positive argon purge, and the reactor is sealed. Hexafluoropropylene (19.3 g) and a 50/50 wt./wt. % mixture (3.4 g) of tetrafluoroethylene (1.7 g) and carbon dioxide (1.7 g) are condensed into the cell at a temperature of below -20°C. The reactor is slowly heated to 35.0°C and held for 8 hours. After the reaction time is complete the carbon dioxide and excess monomer are vented slowly to the atmosphere, the reactor is opened, and the product collected. The product is washed twice with a 50/50 mixture of 1.1.2-trichlorotrifluoroethane and dried under vacuum at elevated temperature. The reaction yields 0.052 g of white polymer (3.1% yield). Thermogravimetric analysis shows a 5% weight loss at 410.0°C. Differential scanning calorimetry shows a virgin melting point of 249.7°C, and a crystallization exotherm at 242.8°C (first cooling).

### EXAMPLE 10

### TFE/HFP Copolymer

A 25 ml high pressure reactor is chilled to well below 0°C in a dry ice/acetone bath under argon. A 0.18 M solution of HFPO dimer peroxide initiator in 1,1,2-trichlorotrifluoroethane (0.050 ml) is added while maintaining a positive argon purge, and the reactor is sealed. Hexafluoropropylene (14.7 g) and a 50/50 wt./wt. % mixture (2.6 g) of tetrafluoroethylene (1.3 g) and carbon dioxide (1.3 g) are condensed into the reactor at a temperature of below -20°C and CO₂ (5.2 g) is added via high pressure syringe pump. The reactor is then slowly heated to 35.0°C and held for 3 hours. After the reaction is complete, the carbon dioxide and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 0.34 g of white polymer (26% yield). Thermogravimetric analysis shows a 5% weight loss at 494.0°C. Differential scanning calorimetry shows a virgin melting point of 267.1°C, and a crystallization exotherm at 247.9°C (first cooling).

### EXAMPLE 11

### TFE/HFP Copolymer

A 25 ml high pressure reactor is chilled to well below 0°C in a dry ice/acetone bath under argon. A 0.24 M solution of HFPO dimer peroxide initiator in 1,1,2-trichlorotrifluoroethane (0.20 ml) is added while maintaining a positive argon purge, and the reactor is sealed. Hexafluoropropylene (19.2 g) and a 50/50 wt./wt. % mixture (4.4 g) of tetrafluoroethylene (2.2 g) and carbon dioxide (2.2 g) are condensed into the reactor at a temperature of below -20°C and CO₂ (5.1 g) is added via high pressure syringe pump. The reactor is slowly heated to 35.0°C and held for 4 hours. After the reaction is complete, the carbon dioxide and excess monomer are vented slowly to the atmosphere, the cell is opened and the product collected. The product is washed twice with a 50/50 mixture of 1,1,2-trichlorotrifluoroethane/methanol and dried under vacuum at elevated temperature. The reaction yields 1.8 grams of white polymer (72% yield). Thermogravimetric analysis shows a 5% weight loss at 447.0°C. Differential scanning calorimetry shows a virgin melting point of 265.8°C, and a crystallization exotherm at 248.7°C (first cooling).

### EXAMPLE 12

### TFE/HFP

A 25 ml high pressure reactor is chilled to well below 0°C in a dry ice/acetone bath under argon. A 0.24 M solution of HFPO dimer peroxide initiator in 1,1,2-trichlorotrifluoroethane (0.03 ml) is added while maintaining a positive argon purge, and the reactor is sealed. Hexafluoropropylene (19.3 g) and a 50/50 wt./wt. % mixture (4.8 g) of tetrafluoroethylene (2.4 g) and carbon dioxide (2.4 g) are condensed into the reactor at a temperature of below -20°C and CO₂ (5.1 g) is added via high pressure syringe pump. The reactor is slowly heated to 35.0°C and held for 4 hours. After the reaction is complete, the carbon dioxide and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 1.7 g of white polymer (71% yield). Thermogravimetric analysis shows a 5% weight loss at 477.0°C. Differential scanning calorimetry shows a virgin melting point of 254.8°C, and a crystallization exotherm at 255.3°C (first cooling). Analysis by FTIR observed 4.3 wt. % hexafluoropropylene incorporation.

### EXAMPLE 13

### TFE/PMVE Copolymer

A 25 ml high pressure reactor is chilled to well below 0°C in a dry ice/acetone bath under argon. A 0.018 M solution of HFPO dimer peroxide initiator in 1,1,2-trichlorotrifluoroethane (0.20 ml) is added while maintaining a positive argon purge, and the reactor is sealed. Perfluoro(methyl vinyl ether) (1.4 g) and a 50/50 wt./wt. % mixture (13.1 g) of tetrafluoroethylene (6.6 g) and carbon dioxide (6.6 g) are condensed into the reactor at a temperature of below -20°C and CO₂ (10 g) is added via high pressure syringe pump. The reactor is slowly heated to 35.0°C and held for 3 hours. After the reaction is complete, the carbon dioxide and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 1.5 grams of white polymer (19% yield). Thermogravimetric analysis shows a 5% weight loss at 534.7°C. Differential scanning calorimetry shows a virgin melting point at 311.4°C, crystallization exotherm at 278.2°C (first cooling), and a second order transition at -39°C.

### EXAMPLE 14

### TFE/PMVE Copolymer

A 25 ml high pressure reactor is chilled to well below 0°C in a dry ice/acetone bath under argon. A 0.24 M solution of HFPO dimer peroxide initiator in 1,1,2-trichlorotrifluoroethane (0.20 ml) is added while maintaining a positive argon purge, and the reactor is sealed. Perfluoro(methyl vinyl ether) (6.1 g) and a 50/50 wt./wt. % mixture (5.6 g) of tetrafluoroethylene (2.8 g) and carbon dioxide (2.8 g) are condensed into the cell at a temperature of below -20°C and CO₂(8 g) is added via high pressure syringe pump. The reactor is slowly heated to 35.0°C and held for 3 hours. After the reaction is complete the CO₂ and excess monomer are vented slowly to the atmosphere, the reactor opened, and the product collected. The product is washed twice with a 50/50 mixture of 1,1,2-trichlorotrifluoroethane/methanol and dried under vacuum at elevated temperature.

The reaction yields 2.2 g of white polymer (25% yield). Thermogravimetric analysis shows a 5% weight loss at 491.3°C. Differential scanning calorimetry shows the absence of a crystalline melting point.

### EXAMPLE 15

### PMVE/TFE Copolymer

A 25 ml high pressure reactor is chilled to well below 0°C in a dry ice/acetone bath under argon. A 0.24 M solution of HFPO dimer peroxide initiator in 1,1,2-trichlorotrifluoroethane (0.20 ml) is added while maintaining a positive argon purge, and the reactor is sealed. Perfluoro(methyl (3.5 g) vinyl ether) (2.5 g) and a 50/50 wt./wt. % mixture (7.0 g) of tetrafluoroethylene (3.5 g) and CO₂ (3.5 g) are condensed into the reactor at a temperature of below -20°C and CO₂ (11.5) is added via high pressure syringe pump. The reactor is slowly heated to 35.0°C and held for 3 hours. After the reaction is complete the CO₂ and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 4.9 g of white polymer (80% yield). Thermogravimetric analysis shows a 5% weight loss at 500.7°C. Differential scanning calorimetry shows the absence of a crystalline melting point.

### EXAMPLE 16

### VF2/HFP Copolymer

A 25 ml high pressure reactor is chilled to well below 0°C in a dry ice/acetone bath under argon. A 0.018 M solution of HFPO dimer peroxide initiator in 1,1,2-trichlorotrifluoroethane (0.20 ml) is added while maintaining a positive argon purge, and the reactor is sealed. Hexafluoropropylene (15.1 g) and vinylidine fluoride (4.0 g) are condensed into the reactor at a temperature of below -20°C and CO₂ (5 g) is added via high pressure syringe pump. The reactor is slowly heated to 35.0°C and held for 3 hours. After the reaction is complete the CO₂ and excess monomer are vented slowly to the atmosphere, the reactor is opened and the product collected. The product is washed twice with a 50/50 mixture of 1,1,2-trichlorotrifluoroethane/methanol and dried under a vacuum at elevated temperature. The reaction yields 0.27 g of gummy translucent polymer (7 % yield based on vinylidine fluoride). Thermogravimetric analysis shows a 5 % weight loss at 456.9°C. Differential scanning calorimetry shows a glass transition at -19.5°C.

### EXAMPLE 17

### VF2/CTFE Copolymer

A 25 ml high pressure reactor is chilled to well below 0°C in a dry ice/acetone bath under argon. A 0.18 M solution of HFPO dimer peroxide initiator in 1,1,2-trichlorotrifluoroethane (0.020 ml) is added while maintaining a positive argon purge, and the reactor is sealed. Chlorotrifluoroethylene (2.0 g) and vinylidine fluoride (4.5 g) are condensed into the reactor at a temperature of below -20°C and CO₂ (10 g) is added via high pressure syringe pump. The reactor is slowly heated to 35.0°C and held for 3 hours. After the reaction is complete the CO₂ and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 0.52 g of gummy translucent polymer (8% yield). Thermogravimetric analysis shows a 5% weight loss at 433.8°C. Differential scanning calorimetry shows glass transition at - 8.3°C.

### EXAMPLE 18

### VF2/CTFE Copolymer

A 25 ml high pressure reactor is chilled to well below 0°C in a dry ice/acetone bath under argon. A 0.24 M solution of HFPO dimer peroxide initiator in 1,1.2-trichlorotrifluoroethane (0.20 ml) is added while maintaining a positive argon purge, and the reactor is sealed. Chlorotrifluoroethylene (3.3 g) and vinylidine fluoride (3.3 g) are condensed into the reactor at a temperature of below -20°C and CO₂ (15 g) is added via high pressure syringe pump. The reactor is then slowly heated to 35.0°C and held for 4 hours. After the reaction is complete the CO₂ and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 0.71 g of gummy translucent polymer (11% yield). Thermogravimetric analysis shows a 5% weight loss at 427.4°C.

### EXAMPLE 19

### Vinyl Fluoride Homopolymer

A 25 ml high pressure reactor is chilled to well below 0°C in a dry ice/acetone bath under argon. A 0.24 M solution of HFPO dimer peroxide initiator in 1,1,2-trichlorotrifluoroethane (0.015 ml) is added while maintaining a positive argon purge, and the reactor is sealed. Vinyl fluoride (3.8 g) is condensed into the reactor at a temperature of below -20°C and CO₂ (15 g) is added via high pressure syringe pump. The reactor is slowly heated to 35.0°C and held for 4 hours. After the reaction is complete the CO₂ and excess monomer are vented slowly to the atmosphere, the cell is opened and the product collected. The product is washed twice with a 50/50 mixture of 1,1,2-trichlorotrifluoroethane/methanol and dried under vacuum at elevated temperature. The reaction yields 0.45 g of gummy translucent polymer (12% yield). Thermogravimetric analysis shows a 5% weight loss at 407.7°C. Analysis by differential scanning calorimetry showed a virgin melting point of 208.4°C and a crystallization exotherm at 164.7°C (first cooling).

### EXAMPLE 20

### TFE/Ethylene Copolymer

A 25 ml high pressure reactor is chilled to well below 0°C in a dry ice/acetone bath under argon. A 0.24 M solution of HFPO dimer peroxide initiator in 1,1,2-trichlorotrifluoroethane (0.015 ml) is added while maintaining a positive argon purge, and the reaction is sealed. A 50/50 wt./wt. % mixture (8.9 g) of tetrafluoroethylene (4.4 g) and CO₂ (4.4 g) and ethylene (3.4 g) are added to the reactor at a temperature of below -20°C and CO₂ (10 g) is added via high pressure syringe pump. The reactor is slowly heated to 35.0°C and held for 4 hours. After the reaction is complete the CO₂ and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 4.8 grams of white polymer (62% yield). Thermogravimetric analysis shows a 5% weight loss at 458.2°C. Differential scanning calorimetry shows a virgin melting point of 231.9°C and crystallization exotherms at 208.4 and 214.5°C.

### EXAMPLE 21

### TFE/Ethylene Copolymer

A 25 ml high pressure reactor is chilled to well below 0°C in a dry ice/acetone bath under argon. A 0.24 M solution of HFPO dimer peroxide initiator in 1,1,2-trichlorotrifluoroethane (0.015 ml) is added while maintaining a positive argon purge, and the reactor is sealed. A 50/50 wt./wt. % mixture (9.3 g) of tetrafluoroethylene (4.6 g) and CO₂ (4.6 g) and ethylene (1.9 g) is added to the reactor at a temperature of below -20°C and CO₂ (10 g) is added via high pressure syringe pump. The reactor is slowly heated to 35.0°C and held for 4 hours. After the reaction is complete the CO₂ and excess monomer are vented slowly to the atmosphere, the reactor is opened and the product collected. The product is washed twice with a 50/50 mixture of 1,1,2-trichlorotrifluoroethane/methanol and dried under vacuum at elevated temperature. The reaction yields 2.9 of white polymer (45 % yield). Thermogravimetric analysis shows a 5% weight loss at 469.4°C. Differential scanning calorimetry shows virgin melting point of 273.1°C and a crystallization exotherm at 248.0°C.

### EXAMPLE 22

### TFE/PPVE Copolymer

A 500 ml high pressure AUTOCLAVE™ fitted with a MAGNADRIVE™ stirrer is cooled to well below 0°C in a dry ice bath under argon. A 0.24 M solution of bis(perfluoro-2-propoxypropionyl)peroxide in 1,1,2-trichlorotrifluoroethane (0.70 ml), methanol (0.10 ml --as a chain transfer agent), and perfluoro(propyl vinyl ether) (30 ml. 46 g) which had previously been sparged with argon, are added while maintaining a positive argon purge and the reactor is sealed. A 50 wt./wt. % mixture (123 g) of tetrafluoroethylene (61.5 g) and carbon dioxide (61.5 g) is condensed into the reactor at a temperature of below -20°C, and CO₂ (190 g) is added via high pressure syringe pump. The reactor is heated to 35°C and held for 4 hours at which time heating is discontinued. After the reaction is complete the carbon dioxide and excess monomer are vented to the atmosphere, the reactor is opened, and the product collected. The product is washed twice with a 50/50 mixture of 1,1,2-trichlorotrifluoroethane/methanol and dried under vacuum at elevated temperature. The reaction yields 43 g of product (70% yield based on TFE). Thermogravimetric shows a 5% weight loss at 511.5°C. Differential scanning calorimetry shows a virgin melting point of 297.1°C, and a crystallization exotherm at 276.3°C (first cooling). End group analysis by FTIR found a combined total of 11 acid fluoride and carboxylic acid end groups per million carbon atoms, in addition to 80 methyl ester end groups per million carbon atoms.

### EXAMPLE 23

### TFE/HFP Copolymer

A 500 ml high pressure AUTOCLAVE™ fitted with a MAGNADRIVE™ stirrer is cooled to well below 0°C in a dry ice bath under argon. A 0.24 M solution of bis(perfluoro-2-propoxypropionyl)peroxide in 1,1,2-trichlorotrifluoroethane (3.0 ml), is added while maintaining a positive argon purge and the reactor is sealed. Hexafluoropropylene (257 g) and a 50/50 wt./wt.% mixture (56 g) of tetrafluoroethylene (28 g) and carbon dioxide (28 g) is condensed into the reactor at a temperature of below -20°C, and CO₂ (100 g) is added via high pressure syringe pump. The reactor is heated to 35°C and held for 4 hours at which time heating is discontinued. After the reaction is complete the carbon dioxide and excess monomer are vented to the atmosphere, the reactor is opened, and the product collected. The product is washed twice with a 50/50 mixture of 1,1,2-trichlorotrifluoroethane/methanol and dried under vacuum at elevated temperature. The reaction yields 17.7 g of product (63% yield based on TFE). Thermogravimetric shows a 5% weight loss at 471.2°C. Differential scanning calorimetry shows a virgin melting point of 260.6°C, and a crystallization exotherm at 251.5°C (first cooling).

The invention is defined by the following claims.

## Claims

1. A process for making fluorinated polymers having stable end groups comprising:
contacting at least one monomer, an initiator capable of producing said stable end groups on said fluorinated polymer, and a polymerization medium comprising liquid or supercritical carbon dioxide; and
polymerizing said monomer to produce a fluorinated homopolymer or a fluorinated copolymer;
with the proviso that when said polymerizing step produces a fluorinated copolymer, said at least one monomer is selected from the groups a) through e) consisting of:
a) tetrafluoroethylene and at least one additional monomer described by a formula selected from the group consisting of CF₂=CFOCF₂CF₂ SO₂F; CF₂=CFOCF₂CF(CF₃)OCF₂CF₂SO₂F; and CF₂=CFOCF₂CF(CF₃)OCF₂CF₂CO₂CH₃;
b) tetrafluoroethylene and at least one additional monomer selected from the group consisting of a partially fluorinated monomer, a monomer having a functional group suitable for crosslinking, hexafluoropropylene, perfluoro(2,2-dimethyldioxole), perfluoro(2,2-dimethyl-1,3-dioxole), a fluorodiene monomer, a perfluoroalkyl ethylene monomer with perfluoroalkyl groups containing 1 to 6 carbon atoms, and a non-fluorinated monomer;
c) at least two monomers selected from the group consisting of a partially fluorinated monomer, a monomer having a functional group suitable for crosslinking, hexafluoropropylene, perfluoro(2,2-dimethyldioxole), perfluoro(2,2-dimethyl-1,3-dioxole), a perfluoroalkyl ethylene monomer with perfluoroalkyl groups containing 1 to 6 carbon atoms, a fluorodiene monomer, and a non-fluorinated monomer;
d) a perfluoro(alkyl vinyl ether) monomer with perfluoroalkyl groups containing 1 to 6 carbon atoms and at least one additional monomer selected from the group consisting of a partially fluorinated monomer, a monomer having a functional group suitable for crosslinking, hexafluoropropylene, a perfluoroalkyl ethylene monomer with perfluoroalkyl groups containing 1 to 6 carbon atoms, perfluoro(2,2-dimethyldioxole), perfluoro(2,2-dimethyl-1,3-dioxole), a fluorodiene monomer, and a non-fluorinated monomer; and
e) tetrafluoroethylene, a perfluoro(alkyl vinyl ether) monomer with perfluoroalkyl groups containing 1 to 6 carbon atoms and at least one additional monomer selected from the group consisting of a partially fluorinated monomer, a monomer having a functional group suitable for crosslinking, hexafluoropropylene, a perfluoroalkyl ethylene monomer with perfluoroalkyl groups containing 1 to 6 carbon atoms, perfluoro(2,2-dimethyldioxole), perfluoro(2,2-dimethyl-1,3-dioxole), a fluorodiene monomer, and a non-fluorinated monomer.

2. The process according to Claim 1, wherein said polymer is a fluorinated homopolymer formed from a monomer selected from the group consisting of tetrafluoroethylene, vinylidene fluoride, hexafluoropropylene, vinyl fluoride, chlorotrifluoroethylene, bromotrifluoroethylene, trifluoroethylene 1,2-difluoroethylene, hexafluoroisobutylene, and bromodifluoroethylene.

3. The process according to Claim 1, wherein said polymer is a fluorinated copolymer formed from monomers selected from the group a), and wherein said at least one additional monomer is CF₂=CFOCF₂CF₂ SO₂F.

4. The process according to Claim 1, wherein said polymer is a fluorinated copolymer formed from monomers selected from group b), and wherein said at least one additional monomer is selected from the group consisting of vinylidene fluoride, hexafluoropropylene, vinyl fluoride, chlorotrifluoroethylene, bromotrifluoroethylene, trifluoroethylene, 1,2-difluoroethylene, hexafluoroisobutylene, bromodifluoroethylene, ethylene, perfluoro(2,2-dimethyldioxole), and perfluoro(2,2-dimethyl-1,3-dioxole).

5. The process according to Claim 1, wherein said polymer is a fluorinated copolymer formed from monomers selected from the group c), and wherein said at least two monomers are selected from the group consisting of vinylidene fluoride, hexafluoropropylene, vinyl fluoride, chlorotrifluoroethylene, bromotrifluoroethylene, trifluoroethylene, 1,2-difluoroethylene, hexafluoroisobutylene, bromodifluoroethylene, ethylene, perfluoro(2,2-dimethyl-1,3-dioxole), and perfluoro(2,2-dimethyldioxole).

6. The process according to Claim 1, wherein said polymer is a fluorinated copolymer formed from monomers selected from the group d), wherein said perfluoro(alkyl vinyl ether) is selected from the group consisting of perfluoro(propyl vinyl ether) and perfluoro(methyl vinyl ether), and wherein said at least one additional monomer is selected from the group consisting of vinylidene fluoride, hexafluoropropylene, vinyl fluoride, chlorotrifluoroethylene, bromotrifluoroethylene, trifluoroethylene, 1,2-difluoroethylene, hexafluoroisobutylene, bromodifluoroethylene, ethylene, perfluoro(2,2-dimethyldioxole), and perfluoro(2,2-dimethyl-1,3-dioxole).

7. The process according to Claim 1, wherein said polymer is a fluorinated copolymer formed from monomers selected from the group e), and wherein said at least one additional monomer is selected from the group consisting of vinylidene fluoride, hexafluoropropylene, vinyl fluoride, chlorotrifluoroethylene, bromotrifluoroethylene, trifluoroethylene, 1,2-difluoroethylene, hexafluoroisobutylene, bromodifluoroethylene, ethylene, perfluoro(2,2-dimethyldioxole), and perfluoro(2,2-dimethyl-1,3-dioxole).

8. The process according to Claim 1, wherein said polymerization medium comprises liquid carbon dioxide.

9. The process according to Claim 1, wherein said polymerization medium comprises supercritical carbon dioxide.

10. The process according to Claim 1, wherein said initiator is selected from the group consisting of chlorinated acyl peroxides, fluorinated acyl peroxides, perfluoroalkyl azo compounds, R₄N=NR₄ wherein R₄ is a linear or branched C₁-C₈ perfluorocarbon, perfluoroalkane radicals, and [CF₃CF₂CF₂OCF(CF₃)COO]₂.

11. The process according to Claim 1, wherein said initiator is selected from the group consisting of trichloroacetyl peroxide, bis(perfluoro-2-propoxy propionyl) peroxide, perfluoropropionyl peroxide, perfluoroazoisopropane, hexafluoropropylene trimer radical, and [CF₃CF₂CF₂OCF(CF₃)COO]₂.

12. The process according to Claim 1, further comprising the steps of separating said fluoropolymer from said polymerization medium and collecting said fluoropolymer.

13. The process according to Claim 12, wherein said step of separating said fluoropolymer comprises venting said polymerization medium to the atmosphere.

14. The process according to Claim 1, wherein said process is carried out in the presence of a chain transfer agent.

15. The process according to Claim 1, further comprising contacting at least one comonomer with said fluoromonomer, said initiator and said polymerization medium, and said polymerizing step comprises copolymerizing said fluoromonomer with said comonomer.

16. The process according to Claim 1, wherein said polymerization medium further comprises a cosolvent.

17. A polymerization reaction mixture useful for carrying out the polymerization of at least one monomer to produce a fluorinated polymer having stable end groups, said reaction mixture comprising:
at least one monomer;
an initiator capable of producing stable end groups on said fluoropolymer, wherein said fluoropolymer is a homopolymer or a copolymer; and
a polymerization medium comprising liquid or supercritical carbon dioxide; with the proviso that when said fluoropolymer is a copolymer, said at least one monomer is selected from the groups a) through e) consisting of:
a) tetrafluoroethylene and at least one additional monomer described by a formula selected from the group consisting of CF₂=CFOC₂F₂CF₂ SO₂F; CF₂=CFOCF₂CF(CF₃)OCF₂CF₂SO₂F; and CF₂=CFOCF₂CF(CF₃)OCF₂CF₂CO₂CH₃;
b) tetrafluoroethylene and at least one additional monomer selected from the group consisting of a partially fluorinated monomer, a monomer having a functional group suitable for crosslinking, hexafluoropropylene, perfluoro(2,2-dimethyldioxole); perfluoro(2,2-dimethyl-1,3-dioxole), a fluorodiene monomer, a perfluoroalkyl ethylene monomer with perfluoroalkyl groups containing 1 to 6 carbon atoms, and a non-fluorinated monomer;
c) at least two monomers selected from the group consisting of a partially fluorinated monomer, a monomer having a functional group suitable for crosslinking, hexafluoropropylene, perfluoro(2,2-dimethyldioxole), perfluoro(2,2-dimethyl-1,3-dioxole), a perfluoroalkyl ethylene monomer with perfluoroalkyl groups containing 1 to 6 carbon atoms, a fluorodiene monomer, and a non-fluorinated monomer;
d) a perfluoro(alkyl vinyl ether) monomer with perfluoroalkyl groups containing 1 to 6 carbon atoms and at least one additional monomer selected from the group consisting of a partially fluorinated monomer, a monomer having a functional group suitable for crosslinking, hexafluoropropylene, a perfluoroalkyl ethylene monomer, perfluoro(2,2-dimethyldioxole), perfluoro(2,2-dimethyl-1,3-dioxole), a fluorodiene monomer, and a non-fluorinated monomer; and
e) tetrafluoroethylene, a perfluoro(alkyl vinyl ether) monomer with perfluoroalkyl groups containing 1 to 6 carbon atoms and at least one additional monomer selected from the group consisting of a partially fluorinated monomer, a monomer having a functional group suitable for crosslinking, hexafluoropropylene, a perfluoroalkyl ethylene monomer with perfluoroalkyl groups containing 1 to 6 carbon atoms perfluoro(2,2-dimethyldioxole), perfluoro(2,2-dimethyl-1,3-dioxole), a fluorodiene monomer, and a non-fluorinated monomer.

18. The polymerization reaction mixture according to Claim 17, wherein said polymer is a fluorinated homopolymer formed from a monomer selected from the group consisting of tetrafluoroethylene, vinylidene fluoride, hexafluoropropylene, vinyl fluoride, chlorotrifluoroethylene, bromotrifluoroethylene, trifluoroethylene, 1,2-difluoroethylene, hexafluoroisobutylene, and bromodifluoroethylene.

19. The polymerization reaction mixture according to Claim 17, wherein said polymer is a fluorinated copolymer formed from monomers selected from the group a), and wherein said at least one additional monomer is CF₂=CFOCF₂CF₂SO₂F.

20. The polymerization reaction mixture according to Claim 17, wherein said polymer is a fluorinated copolymer formed from monomers selected from group b), and wherein said at least one additional monomer is selected from the group consisting of vinylidene fluoride, hexafluoropropylene, vinyl fluoride, chlorotrifluoroethylene, bromotrifluoroethylene, trifluoroethylene, 1,2-difluoroethylene, hexafluoroisobutylene, bromodifluoroethylene, ethylene, perfluoro(2,2-dimethyldioxole), and perfluoro(2,2-dimethyl-1,3-dioxole).

21. The polymerization reaction mixture according to Claim 17, wherein said polymer is a fluorinated copolymer formed from monomers selected from the group c), and wherein said at least two monomers are selected from the group consisting of vinylidene fluoride, hexafluoropropylene, vinyl fluoride, chlorotrifluoroethylene, bromotrifluoroethylene, trifluoroethylene, 1,2-difluoroethylene, hexafluoroisobutylene, bromodifluoroethylene, ethylene, perfluoro(2,2-dimethyl-1,3-dioxole), and perfluoro(2,2-dimethyldioxole).

22. The polymerization reaction mixture according to Claim 17, wherein said polymer is a fluorinated copolymer formed from monomers selected from the group d), wherein said perfluoro(alkyl vinyl ether) is selected from the group consisting of perfluoro(propyl vinyl ether) and perfluoro(methyl vinyl ether), and wherein said at least one additional monomer is selected from the group consisting of vinylidene fluoride, hexafluoropropylene, vinyl fluoride, chlorotrifluoroethylene, bromotrifluoroethylene, trifluoroethylene, 1,2-difluoroethylene, hexafluoroisobutylene, bromodifluoroethylene, ethylene, perfluoro(2,2-dimethyldioxole), and perfluoro(2,2-dimethyl-1,3-dioxole).

23. The polymerization reaction mixture according to Claim 17, wherein said polymer is a fluorinated copolymer formed from monomers selected from the group e), and wherein said at least one additional monomer is selected from the group consisting of vinylidene fluoride, hexafluoropropylene, vinyl fluoride, chlorotrifluoroethylene, bromotrifluoroethylene, trifluoroethylene, 1,2-difluoroethylene, hexafluoroisobutylene, bromodifluoroethylene, ethylene, perfluoro(2,2-dimethyldioxole), and perfluoro(2,2-dimethyl-1,3-dioxole).

24. The polymerization reaction mixture according to Claim 17, wherein said polymerization medium comprises liquid carbon dioxide.

25. The polymerization reaction mixture according to Claim 17, wherein said polymerization medium comprises supercritical carbon dioxide.

26. The polymerization reaction mixture according to Claim 17, wherein said initiator is selected from the group consisting of chlorinated acyl peroxides, fluorinated acyl peroxides, perfluoroalkyl azo compounds, R₄N=NR₄ wherein R₄ is a linear or branched C₁-C₈ perfluorocarbon, perfluoroalkane radicals, and [CF₃CF₂CF₂OCF(CF₃)COO]₂.

27. The polymerization reaction mixture according to Claim 17, further comprising a chain transfer agent.

28. The polymerization reaction mixture according to Claim 17, wherein said polymerization medium further comprises a cosolvent.

## Revendications

1. Procédé pour la préparation de polymères fluorés présentant des groupes terminaux stables comprenant:
la mise en contact d'au moins un monomère, d'un initiateur capable de produire lesdits groupes terminaux stables sur ledit polymère fluoré et d'un milieu de polymérisation comprenant du dioxyde de carbone liquide ou supercritique; et
la polymérisation dudit monomère pour produire un homopolymère fluoré ou un copolymère fluoré;
sous réserve que lorsque ladite étape de polymérisation produit un copolymère fluoré, ledit au moins un monomère soit choisi à partir des groupes a) à e) constitués:
a) du tétrafluoroéthylène et d'au moins un monomère supplémentaire décrit par une formule choisie dans le groupe constitué de CF₂=CFOCF₂CF₂SO₂F; de CF₂=CFOCF₂CF(CF₃)OCF₂CF₂SO₂F; et de CF₂=CFOCF₂CF(CF₃)OCF₂CF₂CO₂CH₃;
b) du tétrafluoroéthylène et d'au moins un monomère supplémentaire choisi dans le groupe constitué d'un monomère partiellement fluoré, d'un monomère présentant un groupe fonctionnel approprié pour une réticulation, l'hexafluoropropylène, le perfluoro(2,2-diméthyldioxole), le perfluoro(2,2-diméthyl-1,3-dioxole), un monomère de fluorodiène, un monomère de perfluoroalkyléthylène, et d'un monomère non fluoré;
c) d'au moins deux monomères choisis dans le groupe constitué d'un monomère partiellement fluoré, d'un monomère présentant un groupe fonctionnel approprié pour une réticulation, l'hexafluoropropylène, le perfluoro(2,2-diméthyldioxole), le perfluoro(2,2-diméthyl-1,3-dioxole), un monomère de perfluoroalkyléthylène, un monomère de fluorodiène, et d'un monomère non fluoré;
d) d'un monomère de perfluoro(alkylvinyléther) et d'au moins un monomère supplémentaire choisi dans le groupe constitué d'un monomère partiellement fluoré, d'un monomère présentant un groupe fonctionnel approprié pour une réticulation, l'hexafluoropropylène, un monomère de perfluoroalkyléthylène, le perfluoro(2,2-diméthyldioxole), le perfluoro(2,2-diméthyl-1,3-dioxole), un monomère de fluorodiène, et d'un monomère non fluoré; et
e) du tétrafluoroéthylène, d'un monomère de perfluoro(alkylvinyléther) et d'au moins un monomère supplémentaire choisi dans le groupe constitué d'un monomère partiellement fluoré, d'un monomère présentant un groupe fonctionnel approprié pour une réticulation, l'hexafluoropropylène, un monomère de perfluoroalkyléthylène, le perfluoro(2,2-diméthyldioxole), le perfluoro(2,2-diméthyl-1,3-dioxole), un monomère de fluorodiène, et d'un monomère non fluoré.

2. Procédé suivant la revendication 1, dans lequel ledit polymère est un homopolymère fluoré formé à partir d'un monomère choisi dans le groupe constitué du tétrafluoroéthylène, du fluorure de vinylidène, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutylène et du bromodifluoroéthylène.

3. Procédé suivant la revendication 1, dans lequel ledit polymère est un copolymère fluoré formé à partir de monomères choisis dans le groupe a) et dans lequel ledit au moins un monomère supplémentaire est CF₂=CFOCF₂CF₂SO₂F.

4. Procédé suivant la revendication 1, dans lequel ledit polymère est un copolymère fluoré formé à partir de monomères choisis dans le groupe b) et dans lequel ledit au moins un monomère supplémentaire est choisi dans le groupe constitué du fluorure de vinylidéne, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutyléne, du bromodifluoroéthylène, de l'éthylène, du perfluoro(2,2-diméthyldioxole) et du perfluoro(2,2-dimétltyl-1,3-dioxole).

5. Procédé suivant la revendication 1, dans lequel ledit polymère est un copolymère fluoré formé à partir de monomères choisis dans le groupe c) et dans lequel lesdits au moins deux monomères sont choisis dans le groupe constitué du fluorure de vinylidène, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutylène, du bromodifluoroéthylène, de l'éthylène, du perfluoro(2,2-diméthyl-1,3-dioxole) et du perfluoro(2,2-diméthyldioxole).

6. Procédé suivant la revendication 1, dans lequel ledit polymère est un copolymère fluoré formé à partir de monomères choisis dans le groupe d), dans lequel ledit perfluoro(alkylvinyléther) est choisi dans le groupe constitué du perfluoro(propylvinyléther) et du perfluoro(méthylvinyléther) et dans lequel ledit au moins un monomère supplémentaire est choisi dans le groupe constitué du fluorure de vinylidène, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutylène, du bromodifluoroéthylène, de l'éthylène, du perfluoro(2,2-diméthyldioxole) et du perfluoro(2,2-diméthyl-1,3-dioxole).

7. Procédé suivant la revendication 1, dans lequel ledit polymère est un copolymère fluoré formé à partir de monomères choisis dans le groupe e) et dans lequel ledit au moins un monomère supplémentaire est choisi dans le groupe constitué du fluorure de vinylidène, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutylène, du bromodifluoroéthylène, de l'éthylène, du perfluoro(2,2-diméthyldioxole) et du perfluoro(2,2-diméthyl-1,3-dioxole).

8. Procédé suivant la revendication 1, dans lequel ledit milieu de polymérisation comprend du dioxyde de carbone liquide.

9. Procédé suivant la revendication 1, dans lequel ledit milieu de polymérisation comprend du dioxyde de carbone supercritique.

10. Procédé suivant la revendication 1, dans lequel ledit initiateur est choisi dans le groupe constitué de peroxydes d'acyle chlorés, de peroxydes d'acyle fluorés, de composés de perfluoroalkylazo, R₄N=NR₄ dans lesquels R₄ est un perfluorocarbone C₁-C₈ linéaire ou ramifié, de radicaux de perfluoroalcane et de [CF₃CF₂CF₂OCF(CF₃)COO]₂.

11. Procédé suivant la revendication 1, dans lequel ledit initiateur est choisi dans le groupe constitué du peroxyde de trichloroacétyle, du peroxyde de bis(perfluoro-2-propoxypropionyle), du peroxyde de perfluoropropionyle, du perfluoroazaisopropane, du radical trimère d'hexafluoropropylène et de [CF₃CF₂CF₂OCF(CF₃)COO]₂.

12. Procédé suivant la revendication 12, comprenant en outre les étapes de séparation dudit fluoropolymère dudit milieu de polymérisation et de récupération dudit fluoropolymère.

13. Procédé suivant la revendication 1, dans lequel ladite étape de séparation dudit fluoropolymère consiste à laisser échapper ledit milieu de polymérisation vers l'atmosphère.

14. Procédé suivant la revendication 1, dans lequel ledit procédé est réalisé en présence d'un agent de transfert de chaîne.

15. Procédé suivant la revendication 1, comprenant en outre la mise en contact d'au moins un comonomère avec ledit fluoromonomère, ledit initiateur et ledit milieu de polymérisation et ladite étape de polymérisation comprend la copolymérisation dudit fluoromonomère avec ledit comonomère.

16. Procédé suivant la revendication 1, dans lequel ledit milieu de polymérisation comprend en outre un co-solvant.

17. Mélange réactionnel de polymérisation utile pour la réalisation de la polymérisation d'au moins un monomère afin de produire un polymère fluoré présentant des groupes terminaux stables, ledit mélange réactionnel comprenant:
au moins un monomère;
un initiateur capable de produire des groupes terminaux stables sur ledit fluoropolymère, dans lequel ledit fluoropolymère est un homopolymère ou un copolymère; et
un milieu de polymérisation comprenant du dioxyde de carbone liquide ou supercritique;
sous réserve que lorsque ledit fluoropolymère est un copolymère, ledit au moins un monomère soit choisi à partir des groupes a) à e) constitués:
a) du tétrafluoroéthylène et d'au moins un monomère supplémentaire décrit par une formule choisie dans le groupe constitué de CF₂=CFOCF₂CF₂SO₂F; de CF₂=CFOCF₂CF(CF₃)OCF₂CF₂SO₂F; et de CF₂=CFOCF₂CF(CF₃)OCF₂CF₂CO₂CH₃;
b) du tétrafluoroéthylène et d'au moins un monomère supplémentaire choisi dans le groupe constitué d'un monomère partiellement fluoré, d'un monomère présentant un groupe fonctionnel approprié pour une réticulation, l'hexafluoropropylène, le perfluoro(2,2-diméthyldioxole), le perfluoro(2,2-diméthyl-1,3-dioxole), un monomère de fluorodiène, un monomère de perfluoroalkyléthylène, et d'un monomère non fluoré;
c) d'au moins deux monomères choisis dans le groupe constitué d'un monomère partiellement fluoré, d'un monomère présentant un groupe fonctionnel approprié pour une réticulation, l'hexafluoropropylène, le perfluoro(2,2-diméthyldioxole), le perfluoro(2,2-diméthyl-1,3-dioxole), un monomère de perfluoroalkyléthylène, un monomère de fluorodiène, et d'un monomère non fluoré;
d) d'un monomère de perfluoro(alkylvinyléther) et d'au moins un monomère supplémentaire choisi dans le groupe constitué d'un monomère partiellement fluoré, d'un monomère présentant un groupe fonctionnel approprié pour une réticulation, l'hexafluoropropylène, un monomère de perfluoroalkyléthylène, le perfluoro(2,2-diméthyldioxole), le perfluoro(2,2-diméthyl-1,3-dioxole), un monomère de fluorodiène, et d'un monomère non fluoré; et
e) du tétrafluoroéthylène, d'un monomère de perfluoro(alkylvinyléther) et d'au moins un monomère supplémentaire choisi dans le groupe constitué d'un monomère partiellement fluoré, d'un monomère présentant un groupe fonctionnel approprié pour une réticulation, l'hexafluoropropylène, un monomère de perfluoroalkyléthylène, le perfluoro(2,2-diméthyldioxole), le perfluoro(2,2-diméthyl-1,3-dioxole), un monomère de fluorodiène, et d'un monomère non fluoré.

18. Mélange réactionnel de polymérisation suivant la revendication 17, dans lequel ledit polymère est un homopolymère fluoré formé à partir d'un monomère choisi dans le groupe constitué du tétrafluoroéthylène, du fluorure de vinylidène, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutylène et du bromodifluoroéthylène.

19. Mélange réactionnel de polymérisation suivant la revendication 17, dans lequel ledit polymère est un copolymère fluoré formé à partir de monomères choisis dans le groupe a) et dans lequel ledit au moins un monomère supplémentaire est CF₂=CFOCF₂CF₂SO₂F.

20. Mélange réactionnel de polymérisation suivant la revendication 17, dans lequel ledit polymère est un copolymère fluoré formé à partir de monomères choisis dans le groupe b) et dans lequel ledit au moins un monomère supplémentaire est choisi dans le groupe constitué du fluorure de vinylidène, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutylène, du bromodifluoroéthylène, de l'éthylène, du perfluoro(2,2-diméthyldioxole) et du perfluoro(2,2-diméthyl-1,3-dioxole).

21. Mélange réactionnel de polymérisation suivant la revendication 17, dans lequel ledit polymère est un copolymère fluoré formé à partir de monomères choisis dans le groupe c) et dans lequel lesdits au moins deux monomères sont choisis dans le groupe constitué du fluorure de vinylidène, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutylène, du bromodifluoroéthylène, de l'éthylène, du perfluoro(2,2-diméthyl-1,3-dioxole) et du perfluoro(2,2-diméthyldioxole).

22. Mélange réactionnel de polymérisation suivant la revendication 17, dans lequel ledit polymère est un copolymère fluoré formé à partir de monomères choisis dans le groupe d), dans lequel ledit perfluoro(alkylvinyléther) est choisi dans le groupe constitué du perfluoro(propylvinyléther) et du perfluoro(méthylvinyléther) et dans lequel ledit au moins un monomère supplémentaire est choisi dans le groupe constitué du fluorure de vinylidène, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutylène, du bromodifluoroéthylène, de l'éthylène, du perfluoro(2,2-diméthyldioxole) et du perfluoro(2,2-diméthyl-1,3-dioxole).

23. Mélange réactionnel de polymérisation suivant la revendication 17, dans lequel ledit polymère est un copolymère fluoré formé à partir de monomères choisis dans le groupe e) et dans lequel ledit au moins un monomère supplémentaire est choisi dans le groupe constitué du fluorure de vinylidène, de l'hexafluoropropylène, du fluorure de vinyle, du chlorotrifluoroéthylène, du bromotrifluoroéthylène, du trifluoroéthylène, du 1,2-difluoroéthylène, de l'hexafluoroisobutylène, du bromodifluoroéthylène, de l'éthylène, du perfluoro(2,2-diméthyldioxole) et du perfluoro(2,2-diméthyl-1,3-dioxole).

24. Mélange réactionnel de polymérisation suivant la revendication 17, dans lequel ledit milieu de polymérisation comprend du dioxyde de carbone liquide.

25. Mélange réactionnel de polymérisation suivant la revendication 17, dans lequel ledit milieu de polymérisation comprend du dioxyde de carbone supercritique.

26. Mélange réactionnel de polymérisation suivant la revendication 17, dans lequel ledit initiateur est choisi dans le groupe constitué de peroxydes d'acyle chlorés, de peroxydes d'acyle fluorés, de composés de perfluoroalkylazo, R₄N=NR₄ dans lesquels R₄ est un perfluorocarbone C₁-C₈ linéaire ou ramifié, de radicaux de perfluoroalcane et de [CF₃CF₂CF₂OCF(CF₃)COO]₂.

27. Mélange réactionnel de polymérisation suivant la revendication 17, comprenant en outre un agent de transfert de chaîne.

28. Mélange réactionnel de polymérisation suivant la revendication 17, dans lequel ledit milieu de polymérisation comprend en outre un co-solvant.

## Patentansprüche

1. Verfahren zum Herstellen eines fluorierten Polymers mit beständigen Endgruppen, das folgende Verfahrensschritte enthält:
Herstellen eines Kontakts zwischen mindestens einem Monomer, einem Initiator, der geeignet ist die beständige Endgruppen an dem fluorierten Polymer herzustellen, und einem Polymerisationsmittel, das flüssiges oder überkritisches Kohlendioxid enthält; und
Polymerisation des Monomers, um ein fluoriertes Homopolymer oder ein fluoriertes Copolymer herzustellen;
unter der Voraussetzung, daß, wenn die Polymerisationstufe ein fluoriertes Copolymer herstellt, dann wird das mindestens eine Polymer ausgewählt aus den Gruppen a) bis e) bestehend aus:
a) Tetrafluorethylen und mindestens einem zusätzlichen Monomer, das durch eine Formel beschrieben wird, welche ausgewählt wird aus der Gruppe bestehend aus CF₂=CFOCF₂CF₂SO₂F; CF₂=CFOCF₂CF(CF₃)OCF₂CF₂SO₂F; und CF₂=CFOCF₂CF(CF₃)OCF₂CF₂CO₂CH₃;
b) Tetrafluorethylen und mindestens einem zusätzlichen Monomer, das ausgewählt wird aus der Gruppe bestehend aus einem teilweise fluorierten Monomer, einem Monomer mit einer für eine Vernetzung geeigneten funktionellen Gruppe, Hexafluorpropylen, Perfluor(2,2-dimethyldioxol), Perfluor(2,2-dimethyl-1,3-dioxol), einem Fluordien Monomer, einem Perfluoralkylethylen Monomer, und einem nicht-fluorierten Monomer;
c) mindestens zwei Monomeren, die ausgewählt werden aus der Gruppe bestehend aus einem teilweise fluorierten Monomer, einem Monomer mit einer für eine Vernetzung geeigneten funktionellen Gruppe, Hexafluorpropylen, Perfluor(2,2-dimethyldioxol), Perfluor(2,2-dimethyl-1,3-dioxol), einem Perfluoralkylethylen Monomer, einem Fluordien Monomer, und einem nicht-fluorierten Monomer;
d) einem Perfluor(alkylvinylether) Monomer und mindestens einem zusätzlichen Monomer, das ausgewählt wird aus der Gruppe bestehend aus einem teilweise fluorierten Monomer, einem Monomer mit einer für eine Vernetzung geeigneten funktionellen Gruppe, Hexafluorpropylen, einem Perfluoralkylethylen Monomer, Perfluor(2,2-dimethyldioxol), Perfluor(2,2-dimethyl-1,3-dioxol), einem Fluordien Monomer, und einem nicht-fluorierten Monomer;
e) Tetrafluorethylen, einem Perfluor(alkylvinylether) Monomer und mindestens einem zusätzlichen Monomer, das ausgewählt wird aus der Gruppe bestehend aus einem teilweise fluorierten Monomer, einem Monomer mit einer für eine Vernetzung geeigneten funktionellen Gruppe, Hexafluorpropylen, einem Perfluoralkylethylen Monomer, Perfluor(2,2-dimethyldioxol), Perfluor(2,2-dimethyl-1,3-dioxol), einem Fluordien Monomer, und einem nicht-fluorierten Monomer;

2. Verfahren gemäß Patentanspruch 1, in welchem das Polymer ein fluoriertes Homopolymer ist, das aus einem Monomer gebildet wird, welches ausgewählt wird aus der Gruppe bestehend aus Tetrafluorethylen, Vinylidenfluorid, Hexafluorpropylen, Vinylfluorid, Chlortrifluorethylen, Bromtrifluorethylen, Trifluorethylen, 1,2-Difluorethylen, Hexafluorisobutylen und Bromdifluorethylen,

3. Verfahren gemäß Patentanspruch 1, in welchem das Polymer ein fluoriertes Copolymer ist, das aus Monomeren gebildet wird, welche ausgewählt werden aus der Gruppe a) und in welchem das mindestens eine zusätzliche Monomer CF₂=CFOCF₂CF₂SO₂F ist.

4. Verfahren gemäß Patentanspruch 1, in welchem das Polymer ein fluoriertes Copolymer ist, das aus Monomeren gebildet wird, welche ausgewählt werden aus der Gruppe b) und in welchem das mindestens eine zusätzliche Monomer ausgewählt wird aus der Gruppe bestehend aus Vinylidenfluorid, Hexafluorpropylen, Vinylfluorid, Chlortrifluorethylen, Bromtrifluorothylen, Trifluorethylen, 1,2-Difluorethylen, Hexafluorisobutylen, Bromdifluorethylen, Ethylen, Perfluor(2,2-dimethyldioxol) und Perfluor(2,2-dimethyl-1,3-dioxol).

5. Verfahren gemäß Patentanspruch 1, in welchem das Polymer ein fluoriertes Copolymer ist, das aus Monomeren gebildet wird, welche ausgewählt werden aus der Gruppe c) und in welchem die mindestens zwei Monomere ausgewählt werden aus der Gruppe bestehend aus Vinylidenfluorid, Hexafluorpropylen, Vinylfluorid, Chlortrifluorethylen, Bromtrifluorethylen, Trifluorethylen, 1,2-Difluorethylen, Hexafluorisobutylen, Bromdifluorethylen, Ethylen, Perfluor(2,2-dimethyl-1,3-dioxol) und Perfluor(2,2-dimethyldioxol).

6. Verfahren gemäß Patentanspruch 1, in welchem das Polymer ein fluoriertes Copolymer ist, das aus Monomeren gebildet wird, welche ausgewählt werden aus der Gruppe d), in welchem das Perfluor(alkylvinylether) ausgewählt wird aus der Gruppe bestehend aus Perfluor(propylvinylether) und Perfluor(methylvinylether), und in welchem das mindestens eine zusätzliche Monomer ausgewählt wird aus der Gruppe bestehend aus Vinylidenfluorid, Hexafluorpropylen, Vinylfluorid, Chlortrifluorethylen, Bromtrifluorethylen, Trifluorethylen, 1,2-Difluorethylen, Hexafluorisobutylen, Bromdifluorethylen, Ethylen, Perfluor(2,2-dimethyldioxol) und Perfluor(2,2-dimethyl-1,3-dioxol).

7. Verfahren gemäß Patentanspruch 1, in welchem das Polymer ein fluoriertes Copolymer ist, das aus Monomeren gebildet wird, welche ausgewählt werden aus der Gruppe e) und in welchem das mindestens eine zusätzliche Monomer ausgewählt wird aus der Gruppe bestehend aus Vinylidenfluorid, Hexafluorpropylen, Vinylfluorid, Chlortrifluorethylen, Bromtrifluorethylen, Trifluorethylen, 1,2-Difluorethylen, Hexafluorisobutylen, Bromdifluorethylen, Ethylen, Perfluor(2,2-dimethyldioxol) und Perfluor(2,2-dimethyl-1,3-dioxol).

8. Verfahren gemäß Patentanspruch 1, in welchem das Polymerisationsmittel flüssiges Kohlendioxid enthält.

9. Verfahren gemäß Patentanspruch 1, in welchem das Polymerisationsmittel überkritisches Kohlendioxid enthält.

10. Verfahren gemäß Patentanspruch 1, in welchem der Initiator ausgewählt wird aus der Gruppe bestehend aus chlorierten Acylperoxiden, fluorierten Acylperoxiden, Perfluoralkylazo-Verbindungen, R₄N=NR₄, worin R₄ ein lineares oder verzweigtes C₁-C₈ Perfluorkohlenstoff ist, Perfuoralkanradikalen und [CF₃CF₂CF₂OCF(CF₃)COO]₂.

11. Verfahren gemäß Patentanspruch 1, in welchem der Initiator ausgewählt wird aus der Gruppe bestehend aus Trichloracetylperoxid, bis(Perfluor-2-propoxypropionyl)peroxid, Perfluorpropionylperoxid, Perfluorazoisopropan, dem trimeren Hexafluorpropylenradikal und [CF₃CF₂CF₂OCF(CF₃)COO]₂.

12. Verfahren gemäß Patentanspruch 1, welches des Weiteren die Schritte des Abtrennens des Fluorpolymers von dem Polymerisationsmittel und des Sammelns des Fluorpolymers enthält.

13. Verfahren gemäß Patentanspruch 12, in welchem der Schritt des Abtrennens des Fluorpolymers das Entlüften des Polymerisationsmittels an die Atmosphäre enthält.

14. Verfahren gemäß Patentanspruch 1, in welchem das Verfahren in Gegenwart eines Kettenübertragungsmittels ausgeführt wird.

15. Verfahren gemäß Patentanspruch 1, welches des Weiteren die Kontaktherstellung zwischen mindestens einem Comonomer und dem Fluormonomer, dem Initiator und dem Polymerisationsmittel enthält, und der Polymerisationsschritt die Copolymerisation des Fluonnonomers mit dem Comonomer enthält.

16. Verfahren gemäß Patentanspruch 1, in welchem das Polymerisationsmittel des Weiteren ein Zusatzlösungsmittel enthält.

17. Polymerisationsreaktionsmischung, die nützlich ist zum Ausführen der Polymerisation von mindestens einem Monomer, um ein fluoriertes Polymer mit beständigen Endgruppen herzustellen, wobei die Reaktionsmischung folgende Komponenten enthält:
- mindestens ein Monomer;
- einen Initiator, der zum Herstellen von beständigen Endgruppen an dem Fluorpolymer geeignet ist, wobei das Fluorpolymer ein Homopolymer oder ein Copolymer ist; und
- ein Polymerisationsmittel, das flüssiges oder überkritisches Kohlendioxid enthält;
unter der Voraussetzung, daß, wenn das Fluorpolymer ein Copolymer ist, das mindestens eine Monomer ausgewählt wird aus den Gruppen a) bis e) bestehend aus:
a) Tetrafluorethylen und mindestens einem zusätzlichen Monomer, das durch eine Formel beschrieben wird, welche ausgewählt wird aus der Gruppe bestehend aus CF₂=-CFOCF₂CF₂SO₂F; CF₂=CFOCF₂CF(CF₃)OCF₂CF₂SO₂F; und CF₂=CFOCF₂CF(CF₃)OCF₂CF₂CO₂CH₃ ;
b) Tetrafluorethylen und mindestens einem zusätzlichen Monomer, das ausgewählt wird aus der Gruppe bestehend aus einem teilweise fluorierten Monomer, einem Monomer mit einer für eine Vernetzung geeigneten funktionellen Gruppe, Hexafluorpropylen, Perfluor(2,2-dimethyldioxol), Perfluor(2,2-dimethyl-1,3-dioxol), einem Fluordien Monomer, einem Perfluoralkylethylen Monomer, und einem nicht-fluorierten Monomer;
c) mindestens zwei Monomeren, die ausgewählt werden aus der Gruppe bestehend aus einem teilweise fluorierten Monomer, einem Monomer mit einer für eine Vernetzung geeigneten funktionellen Gruppe, Hexafluorpropylen, Perfluor(2,2-dimethyldioxol), Perfluor(2,2-dimethyl-1,3-dioxol), einem Perfluoralkylethylen Monomer, einem Fluordien Monomer, und einem nicht-fluorierten Monomer;
d) einem Perfluor(alkylvinylether) Monomer und mindestens einem zusätzlichen Monomer, das ausgewählt wird aus der Gruppe bestehend aus einem teilweise fluorierten Monomer, einem Monomer mit einer für eine Vernetzung geeigneten fünktionellen Gruppe, Hexafluorpropylen, einem Perfluoralkylethylen Monomer, Perfluor(2,2-dimethyldioxol), Perfluor(2,2-dimethyl-1,3-dioxol), einem Fluordien Monomer, und einem nicht-fluorierten Monomer;
e) Tetrafluorethylen, einem Perfluor(alkylvinylether) Monomer und mindestens einem zusätzlichen Monomer, das ausgewählt wird aus der Gruppe bestehend aus einem teilweise fluorierten Monomer, einem Monomer mit einer für eine Vernetzung geeigneten funktionellen Gruppe, Hexafluorpropylen, einem Perfluoralkylethylen Monomer, Perfluor(2,2-dimethyldioxol), Perfluor(2,2-dimethyl-1,3-dioxol), einem Fluordien Monomer, und einem nicht-fluorierten Monomer;

18. Polymerisationsreaktionsmischung gemäß Patentanspruch 17, in welcher das Polymer ein fluoriertes Homopolymer ist, das aus einem Monomer gebildet wird, welches ausgewählt wird aus einer Gruppe bestehend aus Tetrafluorethylen, Vinylidenfluorid, Hexafluorpropylen, Vinylfluorid, Chlortrifluorethylen, Bromtrifluorethylen, Trifluorethylen, 1,2-Difluorethylen, Hexafluorisobutylen und Bromdifluorethylen.

19. Polymerisationsreaktionsmischung gemäß Patentanspruch 17, in welcher das Polymer ein fluoriertes Copolymer ist, das aus Monomeren gebildet wird, welche ausgewählt werden aus der Gruppe a) und in welcher das mindestens eine zusätzliche Monomer CF₂=CFOCF₂CF₂SO₂F ist.

20. Polymerisationsreaktionsmischung gemäß Patentanspruch 17, in welcher das Polymer ein fluoriertes Copolymer ist, das aus Monomeren gebildet wird, welche ausgewählt werden aus der Gruppe b) und in welcher das mindestens eine zusätzliche Monomer ausgewählt wird aus der Gruppe bestehend aus Vinylidenfluorid, Hexafluorpropylen, Vinylfluorid, Chlortrifluorethylen, Bromtrifluorethylen, Trifluorethylen, 1,2-Difluorethylen, Hexafluorisobutylen, Bromdifluorethylen, Ethylen, Perfluor(2,2-dimethyldioxol) und Perfluor(2,2-dimethyl-1,3-dioxol).

21. Polymerisationsreaktionsmischung gemäß Patentanspruch 17, in welcher das Polymer ein fluoriertes Copolymer ist, das aus Monomeren gebildet wird, welche ausgewählt werden aus der Gruppe c) und in welcher die mindestens zwei Monomere ausgewählt werden aus der Gruppe bestehend aus Vinylidenfluorid, Hexafluorpropylen, Vinylfluorid, Chlortrifluorethylen, Bromtrifluorethylen, Trifluorethylen, 1,2-Difluorethylen, Hexafluorisobutylen, Bromdifluorethylen, Ethylen, Perfluor(2,2-dimethyl-1,3-dioxol) und Perfluor(2,2-dimethyldioxol).

22. Polymerisationsreaktionsmischung gemäß Patentanspruch 17, in welcher das Polymer ein fluoriertes Copolymer ist, das aus Monomeren gebildet wird, welche ausgewählt werden aus der Gruppe d), in welcher das besagte Perfluor(alkylvinylether) ausgewählt wird aus der Gruppe bestehend aus Perfluor(propylvinylether) und Perfluor(methylvinylether), und in welcher das mindestens eine zusätzliche Monomer ausgewählt wird aus der Gruppe bestehend aus Vinylidenfluorid, Hexafluorpropylen, Vinylfluorid, Chlortrifluorethylen, Bromtrifluorethylen, Trifluorethylen, 1,2-Difluorethylen, Hexafluorisobutylen, Bromdifluorethylen, Ethylen, Perfluor(2,2-dimethyldioxol) und Perfluor(2,2-dimethyl-1,3-dioxol).

23. Polymerisationsreaktionsmischung gemäß Patentanspruch 17, in welcher das Polymer ein fluoriertes Copolymer ist, das aus Monomeren gebildet wird, welche ausgewählt werden aus der Gruppe e) und in welcher das mindestens eine zusätzliche Monomer ausgewählt wird aus der Gruppe bestehend aus Vinylidenfluorid, Hexafluorpropylen, Vinylfluorid, Chlortrifluorethylen, Bromtrifluorethylen, Trifluorethylen, 1,2-Difluorethylen, Hexafluorisobutylen, Bromdifluorethylen, Ethylen, Perfluor(2,2-dimethyldioxol) und Perfluor(2,2-dimethyl-1,3-dioxol).

24. Polymerisationsreaktionsmischung gemäß Patentanspruch 17, in welcher das Polymerisationsmittel flüssiges Kohlendioxid enthält.

25. Polymerisationsreaktionsmischung gemäß Patentanspruch 17, in welcher das Polymerisationsmittel überkritisches Kohlendioxid enthält.

26. Polymerisationsreaktionsmischung gemäß Patentanspruch 17, in welcher der Initiator ausgewählt wird aus der Gruppe bestehend aus chlorierten Acylperoxiden, fluorierten Acylperoxiden, Perfluoralkylazo-Verbindungen, R₄N=NR₄, worin R₄ ein lineares oder verzweigtes C₁-C₈ Perfluorkohlenstoff ist, Perfuoralkanradikalen und [CF₃CF₂CF₂OCF(CF₃)COO]₂.

27. Polymerisationsreaktionsmischung gemäß Patentanspruch 17, welche des Weiteren ein Kettenübertragungsmittel enthält.

28. Polymerisationsreaktionsnüschung gemäß Patentanspruch 17, in welcher das Polymerisationsmittel des Weiteren ein Zusatzlösungsmittel enthält.
